(19) Europäisches Patentamt
European Patent Office
Office européen des brevets

(11) **EP 3 404 911 A1**

(12) **EUROPEAN PATENT APPLICATION**

(43) Date of publication:
**21.11.2018 Bulletin 2018/47**

(51) Int Cl.:
*H04N 5/225* (2006.01)     *H04N 5/232* (2006.01)

(21) Application number: **18171096.3**

(22) Date of filing: **07.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.05.2017   JP 2017097536**

(71) Applicant: **Panasonic Intellectual Property Management Co., Ltd.**
**Osaka-shi, Osaka 540-6207 (JP)**

(72) Inventors:
• **AIHARA, Masayuki**
  **Osaka-shi, Osaka 540-6207 (JP)**
• **MATSUMURA, Yoshio**
  **Osaka-shi, Osaka 540-6207 (JP)**
• **YATSURI, Shigenori**
  **Osaka-shi, Osaka 540-6207 (JP)**
• **SHOBAYASHI, Hiroyuki**
  **Osaka-shi, Osaka 540-6207 (JP)**

(74) Representative: **Eisenführ Speiser**
**Patentanwälte Rechtsanwälte PartGmbB**
**Postfach 10 60 78**
**28060 Bremen (DE)**

(54) **IMAGING SYSTEM AND MOVING BODY CONTROL SYSTEM**

(57)     An imaging system includes first imaging device (10a) and second imaging device (10b). First imaging device (10a) includes a first optical system having a first view angle, and a first imaging element. Second imaging device (10b) includes a second optical system having a second view angle that is wider than the first view angle, and a second imaging element. The second optical system is configured to form an image including a first region and a second region, which do not overlap each other, such that a resolution in the second region is higher than a resolution in the first region corresponding to an imaging range of the first view angle, in an imaging surface of a subject image.

FIG. 1

**Description**

BACKGROUND

1. Technical Field

The present disclosure relates to an imaging system that captures an image of a predetermined region, and generates image data used for image analysis. Furthermore, the present disclosure relates to a moving body control system including the imaging system.

2. Description of the Related Art

Recently, in an automotive field, there has been a widely-used automotive vehicle that captures an image ahead of the vehicle by using a camera, and recognizes a traffic lane on which the vehicle is driving, a vehicle ahead of the vehicle, a person, an obstacle, or other objects, based on the captured image, to control action (a speed or braking) of the vehicle. Therefore, various in-vehicle cameras mounted on vehicles have been developed (refer to, for example, PTLs 1 and 2).

Citation List

Patent Literature

PTL 1: Unexamined Japanese Patent Publication No. 2017-046051
PTL 2: Unexamined Japanese Patent Publication No. 2017-017480

SUMMARY

To accurately recognize, based on a captured image, other vehicles, persons, obstacles, or other objects ahead of a vehicle, a captured image with high definition is demanded.
The present disclosure provides an imaging system that provides image data with high definition suitable for image recognition. Furthermore, the present disclosure provides a moving body control system provided with such an imaging system.
A first aspect of the present disclosure provides the imaging system. The imaging system includes a first imaging device including a first optical system having a first view angle and a first imaging element that captures a first subject image formed through the first optical system to generate first image data, and a second imaging device including a second optical system having a second view angle that is wider than the first view angle and a second imaging element that captures a second subject image formed through the second optical system to generate second image data. When a number of pixels that capture a subject image involved in a unit view angle is defined as a resolution, the second optical system is configured to form an image including a first region and a second region, which do not overlap each other, such that a resolution in the second region is higher than a resolution in the first region corresponding to an imaging range with the first view angle, in an imaging surface of the second subject image.
A second aspect according to the present disclosure provides a moving body control system that controls action of a moving body based on a captured image. The moving body control system includes the imaging system according to the first aspect and a control device that controls the action of the moving body based on information analyzed by the imaging system.
According to the imaging system in the present disclosure, image data with high definition used for image analysis can be generated. According to the moving body control system of the present disclosure, the action of the moving body is controlled based on an analysis result of the image data with high definition, whereby accurate control according to a surrounding condition can be achieved.

BRIEF DESCRIPTION OF THE DRAWINGS

FIG. 1 is a diagram illustrating a configuration of an imaging system, which is mounted on an automotive vehicle, according to a first exemplary embodiment of the present disclosure;

FIG. 2 is a diagram illustrating a specific configuration of an image analysis device in the imaging system;

FIG. 3 is a diagram illustrating specific configurations of respective imaging devices in the imaging system;

FIG. 4 is a view describing view angles (imaging ranges) of the respective imaging devices in the imaging system;

FIG. 5 is a view describing a distribution of a resolution in an image (first image) formed on an imaging element through an optical system (first optical system) in a first imaging device (part (A)), describing a distribution of a resolution in an image (second image) formed on an imaging element through an optical system (second optical system) in a second imaging device (part (B)), and describing a distribution of a resolution in an image (third image) formed on an imaging element through an optical system (third optical system) in a third imaging device (part (C));

FIG. 6 is a view illustrating an exemplary configuration of the optical system in the second imaging device (cross sections of free-form surface lenses virtually taken in a vertical plane including an optical axis);

FIG. 7 is a view illustrating a relationship between a view angle and an image point, of the first optical system (part (A)), illustrating a relationship between a view angle and an image point, of the second optical system (part (B)), and illustrating a relationship between a view angle and an image point, of the third optical system (part (C));

FIG. 8 is a view describing a resolution of an image formed on the imaging element by the optical system in the second imaging device;

FIG. 9 is a table showing detection rates when an object is detected based on images captured by the first to third imaging devices; and

FIG. 10 is a view describing an exemplary distribution of a resolution in an image (first image) formed on an imaging element through a first optical system (part (A)), describing an exemplary distribution of a resolution in an image (second image) formed on an imaging element through a second optical system (part (B)), and describing an exemplary distribution of a resolution in an image (third image) formed on an imaging element through a third optical system (part (C)).

DETAILED DESCRIPTION

Hereinafter, exemplary embodiments will be described in detail with reference to the drawings as appropriate. However, descriptions in more detail than necessary may be omitted. For example, a detailed description of well-known matters and a duplicate description of substantially identical configurations may be omitted. Such omissions are made in order to avoid unnecessary redundancy of the following description and to facilitate understanding of those skilled in the art.

Here, the inventors of the present disclosure provide the accompanying drawings and the following description such that those skilled in the art can sufficiently understand the present disclosure, and therefore, they do not intend to restrict the subject matters of claims by the accompanying drawings and the following description.

(First exemplary embodiment)

[1-1. Configuration]

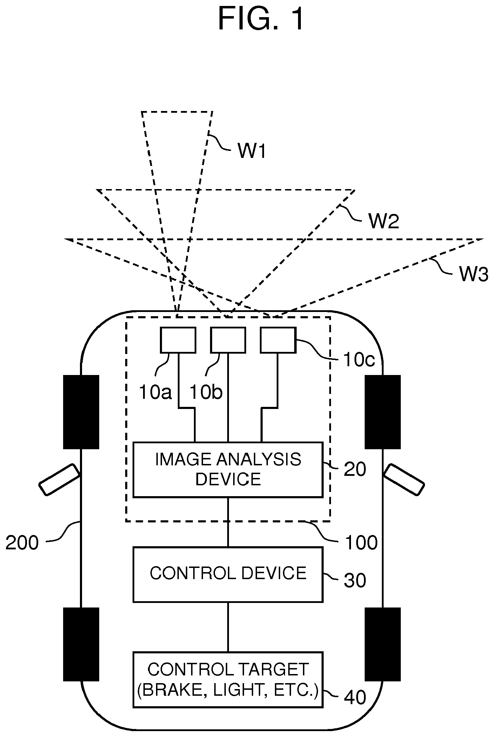

FIG. 1 is a diagram illustrating a configuration of an imaging system, being mounted on an automobile, according to a first exemplary embodiment of the present disclosure. The automobile is an example of a moving body. Automotive vehicle 200 includes imaging system 100, control device 30, and control target 40. Imaging system 100 captures an image of a scene ahead of the vehicle and analyzes a situation ahead of the vehicle based on the captured image. Control device 30 controls action of vehicle 200 based on the analysis result analyzed by imaging system 100. Control target 40 is controlled by control device 30. For example, control target 40 includes at least one of a brake, an engine, a light, a speaker, a display, a vibrator, a motor, an actuator, or other devices. These components are used to achieve various action of the automobile. Imaging system 100 and control device 30 configure a vehicle control system.

Imaging system 100 includes first imaging device 10a, second imaging device 10b, and third imaging device 10c, which respectively capture images of a scene ahead of the vehicle and generate image data, and image analysis device 20 that analyzes the image data generated by first imaging device 10a to third imaging device 10c. First imaging device 10a to third imaging device 10c are disposed at a front part of the vehicle. The front part of the vehicle is a front bumper, for example. First imaging device 10a to third imaging device 10c are disposed such that respective optical axes of those imaging devices substantially coincide with each other in a horizontal direction.

First imaging device 10a to third imaging device 10c respectively have view angles W1 to W3 that are different from each other, as illustrated in FIG. 1. View angles W1 to W3 are view angles defined in the horizontal direction. First imaging device 10a captures an image of a region with narrowest view angle W1. In this exemplary embodiment, view angle W1 is set to 35 degrees. Second imaging device 10b captures an image of a region with view angle W2 that is wider than view angle W1. In this exemplary embodiment, view angle W2 is set to 50 degrees. Third imaging device 10c captures an image of a region with view angle W3 that is wider than view angle W2. In this exemplary embodiment, view angle W3 is set to 120 degrees. In this manner, three imaging devices 10a to 10c respectively having different view angles from each other generate a plurality of captured images respectively having different view angles from each other.

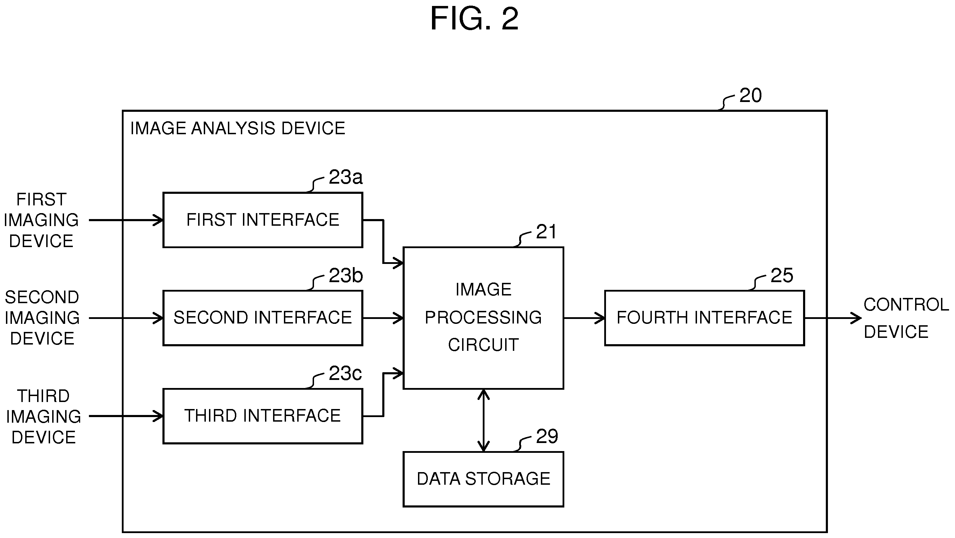

Image analysis device 20 receives the captured images captured by three imaging devices 10a to 10c. Further, image analysis device 20 analyzes the captured images that have been received, and detects at least one of a vehicle, a person, a bicycle, a traffic lane, a traffic sign, an obstacle, or the like ahead of the vehicle. Hereafter, those objects are referred to as "detection targets". FIG. 2 is a diagram illustrating a configuration of image analysis device 20. Image analysis device 20 includes first interface 23a to third interface 23c, image processing circuit 21, fourth interface 25, and data storage 29.

First interface 23a to third interface 23c receive pieces of image data from first imaging device 10a to third imaging device 10c, respectively. Image processing circuit 21 performs, on each piece of received image data, analysis processing for detecting a predetermined object. Fourth interface 25 transmits the analysis result to control device 30. Data storage 29 stores a program to be executed by image processing circuit 21 and the received image data, for example. Image processing circuit 21 includes a central processing unit (CPU). Image processing circuit 21 executes the program stored in data storage 29 to achieve a function described below. Image processing circuit 21 may include a dedicated hardware circuit designed so as to achieve the function described below. In other words, image processing circuit 21 may include the CPU, a micro processing unit (MPU), a field-programmable gate array (FPGA), a digital signal processor (DSP), or an application specific integrated circuit (ASIC), for example. Data storage 29 is configured with a hard disk drive (HDD), a solid state drive (SSD), a nonvolatile memory, or random access memory (RAM), for example.

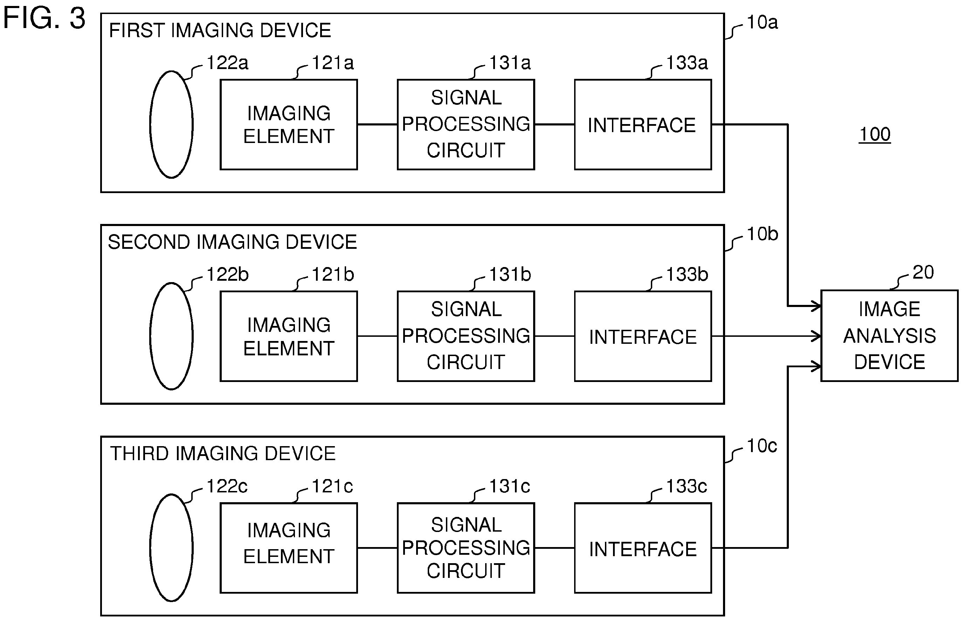

FIG. 3 is a diagram illustrating detailed configurations of first imaging device 10a to third imaging device 10c in imaging system 100. First imaging device 10a to third imaging device 10c respectively capture images of a subject to generate first image data to third image data.

First imaging device 10a includes optical system 122a, imaging element 121a, signal processing circuit 131a, and interface 133a. Imaging element 121a captures a subject image generated by receiving light through optical system 122a and generates an image signal. Signal processing circuit 131a performs predetermined image processing (for example, gamma correction and distortion correction) on the image signal. Interface 133a is a circuit for outputting the image signal that is signal-processed by signal processing circuit 131a to an external apparatus.

Second imaging device 10b includes optical system 122b, imaging element 121b, signal processing circuit 131b, and interface 133b. Imaging element 121b captures a subject image generated by receiving light through optical system 122b and generates an image signal. Signal processing circuit 131b performs predetermined image processing (for example, gamma correction and distortion correction) on the image signal. Interface 133b is a circuit for outputting the image signal that is signal-processed by signal processing circuit 131b to the external apparatus.

Third imaging device 10c includes optical system 122c, imaging element 121c, signal processing circuit 131c, and interface 133c. Imaging element 121c captures a subject image generated by receiving light through optical system 122c and generates an image signal. Signal processing circuit 131c performs predetermined image processing (for example, gamma correction and distortion correction) on the image signal. Interface 133c is a circuit for outputting the image signal that is signal-processed by signal processing circuit 131c to the external apparatus.

Imaging elements 121a to 121c are charge coupled device (CCD) or complementary metal oxide semiconductor (CMOS) image sensors, for example. With respect to each generated image, its aspect ratio is 16:9, and a number of pixels is 1920 × 1080, for example.

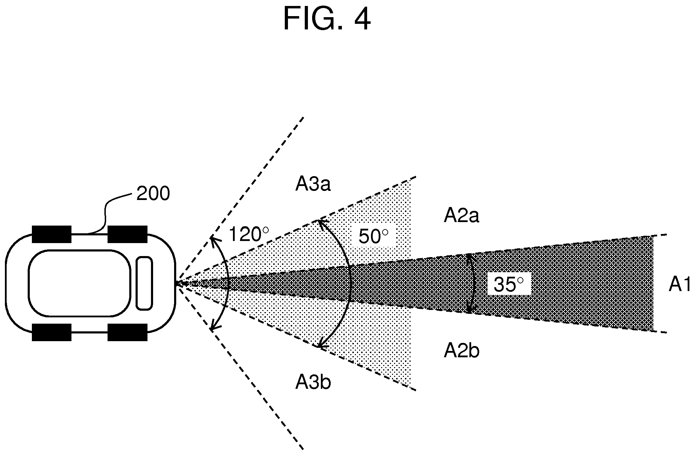

FIG. 4 is a view describing the view angles of first imaging device 10a to third imaging device 10c. First imaging device 10a captures an image of region A1 whose view angle is within 35 degrees. Second imaging device 10b captures an image of a region whose view angle is within 50 degrees (region A2a, region A1, and region A2b). Third imaging device 10c captures an image of a region whose view angle is within 120 degrees (region A3a, region A2a, region A1, region A2b, and region A3b). In this manner, first imaging device 10a to third imaging device 10c respectively capture images of regions with view angles different from each other.

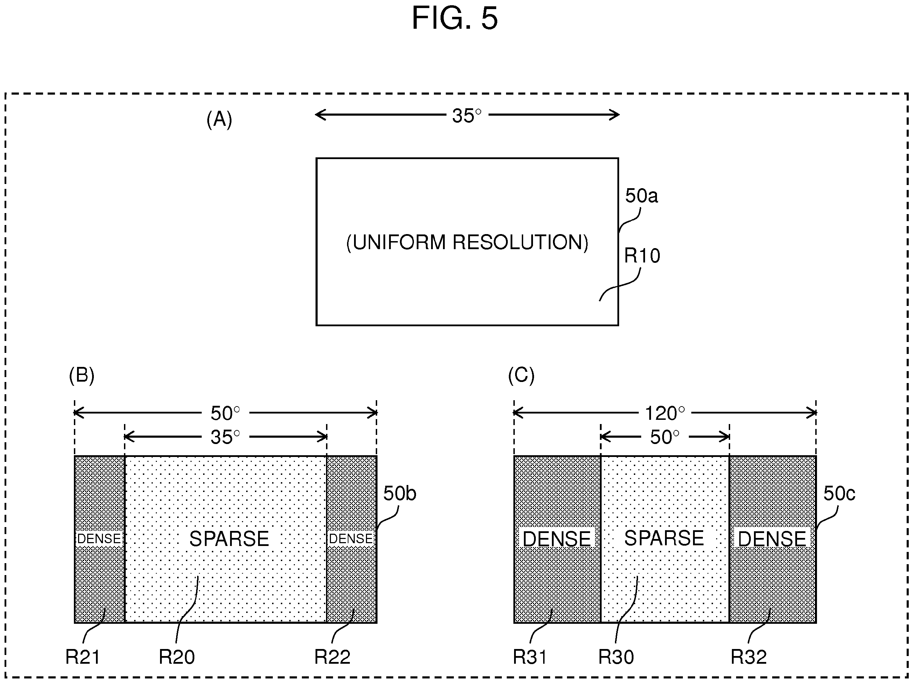

FIG. 5 is a view describing resolutions in images respectively formed, by optical systems 122a to 122c of first imaging device 10a to third imaging device 10c, on imaging surfaces of imaging elements.

Optical system 122a in first imaging device 10a is designed so as to form a subject image of a region with the view angle being 35 degrees (that is, region A1). Optical system 122b in second imaging device 10b is designed so as to form a subject image of a region with the view angle being 50 degrees (that is, region A2a, region A1, and region A2b). Optical system 122c in third imaging device 10c is designed so as to form a subject image of a region with the view angle being 120 degrees (that is, region A3a, region A2a, region A1, region A2b, and region A3b).

Optical system 122a of first imaging device 10a is designed so as to obtain a uniform "resolution" over an entire region of image 50a (first image) to be formed. The "resolution" herein corresponds to a number of pixels in imaging elements 121a to 121c used to capture images with a unit view angle formed on imaging elements 121a to 121c through optical systems 122a to 122c (a detailed description will be made later). In contrast, each of optical system 122b in second imaging device 10b and optical system 122c in third imaging device 10c is designed such that, in image 50b (second image) and image 50c (third image) to be formed, a resolution (or magnification ratio) of a region overlapping a range of a view angle of another optical system (hereafter, referred to as a "view angle overlapping region") is lower than a resolution (or magnification ratio) of a region different from the view angle overlapping region. In this exemplary embodiment, the region different from the view angle overlapping region is, for example, a region other than the view angle overlapping region in each imaging surface.

For example, a range with the view angle being 35 degrees in optical system 122b in second imaging device 10b overlaps the region of optical system 122a in first imaging device 10a (refer to FIG. 4). Accordingly, as illustrated in part (B) of FIG. 5, in image 50b formed by optical system 122b, optical system 122b is designed such that a resolution (or magnification ratio) of view angle overlapping region R20 is lower (sparser) than a resolution (or magnification ratio) of regions R21, R22 other than the view angle overlapping region. Note that region R20 corresponds to a first region in the present disclosure. Further regions R21, R22 collectively correspond to a second region in the present disclosure. In image 50b formed by optical system 122b, view angle overlapping region R20 includes an image of region A1 illustrated in FIG. 4, and regions R21, R22 respectively include images of regions A2a, A2b.

Similarly, a range with the view angle being 50 degrees in optical system 122c in third imaging device 10c overlaps the region of optical system 122b in second imaging device 10b (refer to FIG. 4). Accordingly, as illustrated in part (C) of FIG. 5, optical system 122c is designed such that a resolution (or magnification ratio) of view angle overlapping region R30 is lower (sparser) than a resolution (or magnification ratio) of regions R31, R32 other than the view angle overlapping region, in image 50c formed by optical system 122c. Note that region R30 corresponds to a third region in the present disclosure. Further regions R31, R32 collectively correspond to a fourth region in the present disclosure. In image 50c formed by optical system 122c, view angle overlapping region R30 includes images of regions A2a, A1, and A2b illustrated in FIG. 4, and regions R31, R32 respectively include regions A3a, A3b.

In this manner, optical system 122b forms one image including regions of different resolutions. Further, optical system 122c also forms one image including regions of different resolutions. Configurations of such optical system 122b in second imaging device 10b and optical system 122c in third imaging device 10c will be described below.

Optical systems 122a to 122c are devices for forming images on imaging surfaces of imaging elements 121a to 121c, respectively. Each of optical systems 122a to 122c includes a lens, a diaphragm, and a filter, for example. In particular, optical systems 122b and 122c each include free-form surface lenses.

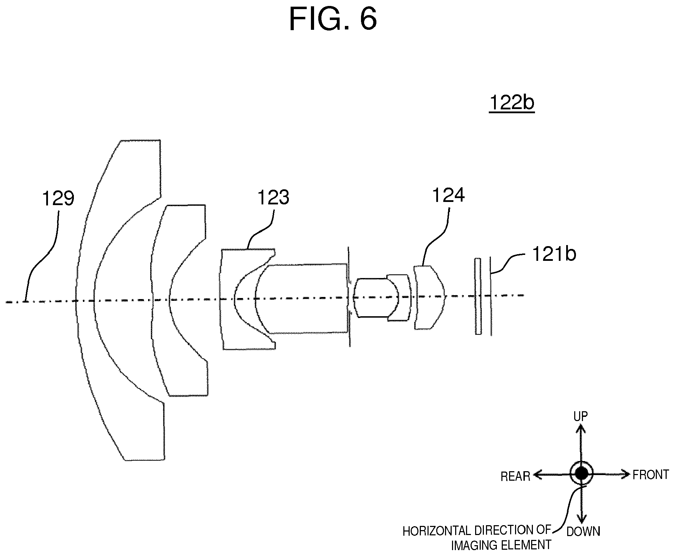

FIG. 6 is a view illustrating an exemplary configuration of optical system 122b in second imaging device 10b. FIG. 6 is a cross-sectional view of optical system 122b virtually taken in a vertical plane including optical axis 129. The above vertical plane is a plane taking a horizontal direction of imaging element 121b as a normal line. Herein, optical axis 129 is a virtual line that passes through a center of the imaging surface of imaging element 121b and orthogonally intersects the imaging surface. Note that, when optical system 122b includes, for example, a mirror or a prism that reflects light, its optical axis is bent by the reflection. As illustrated in FIG. 6, optical system 122b includes a plurality of lenses. In particular, optical system 122b includes the free-form surface lenses 123, 124.

The free-form surface lens is a lens in which a surface for refracting light to form an image has a non-arc shape and is not rotation symmetry. Note that a cylindrical lens is one type of an arc-shaped lens, which is different from the free-form surface lens. The free-form surface lens has the non-arc shape that is not a part of a perfect circle. Examples of a material of the free-form surface lens include, but not particularly limited to, glass and resin. Examples of a method of manufacturing the free-form surface lens include, but not particularly limited to, a method of molding the free-form surface lens by using a mold such as a metal mold.

A set of free-form surface lenses 123 and 124 of this exemplary embodiment constitutes a lens that can cause a magnification ratio in an image to be formed to vary depending on a view angle. In this exemplary embodiment, free-form surface lenses 123 and 124 are particularly designed such that, in an entire image to be formed on an image surface, a magnification ratio of outer peripheral regions of a region with a predetermined range (that is, a predetermined view angle) including a center (that is, an optical axis) is larger than a magnification ratio of the region with the predetermined range. In other words, as illustrated in part (B) of FIG. 5, free-form surface lenses 123 and 124 are designed such that a magnification ratio of images formed in regions R21, R22 corresponding to an view angle being from 35 degrees to 50 degrees inclusive, which are present on outer sides of region R20, is larger than a magnification ratio of an image formed in region R20 corresponding to an view angle being 35 degrees, in image 50b (second image) formed on the imaging surface of imaging element 121b through optical system 122b. With this configuration, as illustrated in part (B) of FIG. 5, a resolution of the images in regions R21, R22 on the outer sides of region R20 is set larger (denser) than a resolution of the image in region R20 at the center part, in image 50b. In other words, pixels become denser in regions R21 and R22.

Optical system 122b in second imaging device 10b has been described above, but optical system 122c in third imaging device 10c has the same configuration. In other words, optical system 122c also includes the free-form surface lenses. Further, optical system 122c is also designed so as to cause its resolution to vary depending on the view angle.

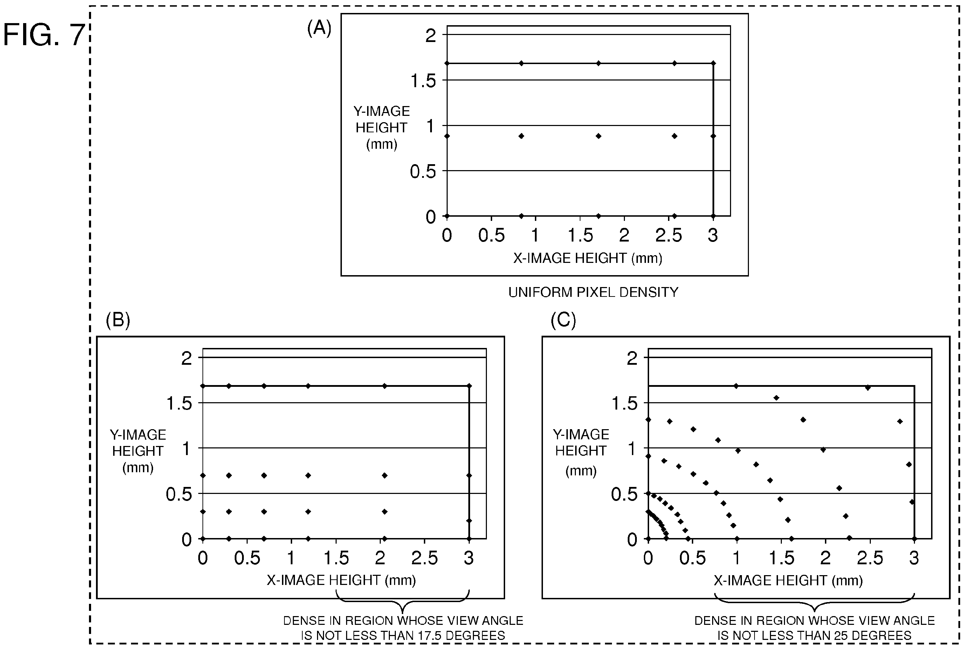

Part (A) of FIG. 7 is a view illustrating a relationship between a view angle and an image point, of optical system 122a in first imaging device 10a. Part (B) of FIG. 7 is a view illustrating a relationship between a view angle and an image point, of optical system 122b in second imaging device 10b. Part (C) of FIG. 7 is a view illustrating a relationship between a view angle and an image point, of optical system 122c in third imaging device 10c. Note that each of parts (A) to (C) of FIG. 7 illustrates a relationship between a view angle and an image point in a first quadrant of an image surface with an optical axis as the center. Each of other quadrants has a relationship that is line symmetry with the first quadrant with respect to a vertical axis or a horizontal axis.

In parts (A), (B) of FIG. 7, the image points are plotted for every 5 degrees in view angle, in the horizontal and vertical directions, and, in part (C) of FIG. 7, the image points are plotted for every 10 degrees in view angle, in the horizontal and vertical directions. With reference to part (A) of FIG. 7, in optical system 122a of first imaging device 10a, intervals of the image points are uniform regardless of the view angle. This indicates a magnification ratio being uniform.

In contrast, with reference to part (B) of FIG. 7, for optical system 122b of second imaging device 10b, plotting intervals of the image points in a region whose view angle is larger than 17.5 degrees (= 35 degrees/2) are set wider than those in a region whose view angle is less than 17.5 degrees, in the first quadrant. This indicates that an image in the region whose view angle is larger than 17.5 degrees is formed while being magnified, in comparison with an image in the region whose view angle is less than 17.5 degrees, in the first quadrant.

Similarly, with reference to part (C) of FIG. 7, for optical system 122c of third imaging device 10c, plotting intervals of the image points in a region whose view angle is larger than 25 degrees (= 50 degrees/2) are set wider than those in a region whose view angle is less than 25 degrees, in the first quadrant. This indicates that an image in the region whose view angle is larger than 25 degrees is formed while being magnified, in comparison with an image in the region whose view angle is less than 25 degrees, in the first quadrant.

Optical system 122b is designed so as to have an optical characteristic described above. Therefore, as illustrated in part (B) of FIG. 5, in image 50b generated by imaging element 121b, the resolution of the images formed in regions R21, R22 on the outer sides of region R20 is set larger (that is, denser) than the resolution of the image formed in region R20 at the center part. Similarly, as illustrated in part (C) of FIG. 5, with an optical characteristic of optical system 122c, in image 50c generated by imaging element 121c, the resolution of the images formed in regions R31, R32 on the outer sides of region R30 is set larger (that is, denser) than the resolution of the image formed in region R30 at the center part.

The "resolution" herein is defined as a number of pixels in imaging elements 121a to 121c used to capture images in a unit view angle formed on imaging elements 121a to 121c through optical systems 122a to 122c (refer to Formula (1) below).

$$\text{Resolution} = \text{number of pixels required to capture image with}$$
$$\text{predetermined view angle/predetermined view angle} \qquad (1)$$

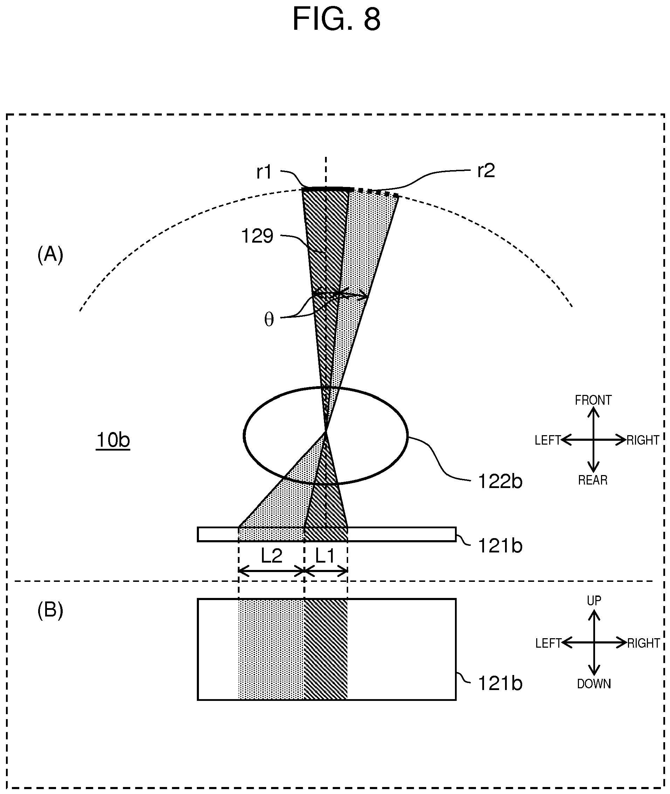

With reference to FIG. 8, the "resolution" will be described below. FIG. 8 is a view illustrating an image-forming state onto imaging element 121b by optical system 122b in second imaging device 10b. As illustrated in FIG. 8, it is assumed that a subject image of first region r1 in a range of view angle $\theta$ including optical axis 129 and a subject image of second region r2 having identical view angle $\theta$ adjacent to region r1 are formed onto imaging element 121b through optical system 122b. Part (A) of FIG. 8 is a view schematically describing an image-forming state on imaging element 121b virtually taken in a horizontal plane including the optical axis. Part (B) of FIG. 8 is a view schematically describing a state of an image formed on the imaging surface of imaging element 121b.

As described above, optical system 122b is designed such that magnification ratio (M2) of regions R21, R22 on the outer sides of region R20 (view angle overlapping region) is set larger than magnification ratio (M1) of region R20 at the center part, as illustrated in part (B) of FIG. 5. Therefore, when imaging element 121b captures an image of a subject in first region r1 including the center part (optical axis) through optical system 122b, the image of first region r1 is formed on the imaging surface while being magnified with magnification ratio M1, as illustrated in parts (A), (B) of FIG. 8. A length of the image of first region r1 formed on the imaging surface at this time is indicated by L1. When imaging element 121b captures an image of a subject in second region r2 separated from the center part (optical axis), the image is formed on the imaging surface while being magnified with magnification ratio M2 that is larger than magnification ratio M1 at the center part. Therefore, length L2 of the image of second region r2 is larger than length L1 of the image of first region r1, on the imaging surface.

On imaging element 121b, pixels are arranged at equal intervals in a two-dimensional manner. Therefore, with an increase in length of an image in a horizontal direction, a number of pixels required to capture the image increases more. In other words, number N2 of pixels required to capture the image of second region r2 having length L2 (> L1) is larger than number N1 of pixels required to capture the image of first region r1 having length L1. The view angle of first region r1 and the view angle of second region r2 are equal, which is $\theta$.

Accordingly, a "resolution" of the image for second region r2 (= N2/$\theta$) (a number of pixels per unit view angle) is larger (denser) than a "resolution" of the image for first region r1 (= N1/$\theta$).

Note that, an expression of different resolutions in this exemplary embodiment means a difference in resolutions, which is produced by a combination of an optical system configured mainly with a spherical lens and a planer imaging element.

As described above, the magnification ratio of each of optical systems 122b, 122c of this exemplary embodiment varies depending on the view angle. As a result, the resolution of each of images formed on imaging surfaces of imaging elements 121b, 121c varies depending on the view angle (that is, the region in the image). For example, as illustrated in part (B) of FIG. 5, in image 50b formed on the imaging surface, the resolution of regions R21, R22 on the outer sides of center region R20 is higher than the resolution of center region R20 corresponding to the predetermined view angle. Similarly, as illustrated in part (C) of FIG. 5, in image 50c formed on the imaging surface, the resolution of regions R31, R32 on the outer sides of center region R30 is higher than the resolution of center region R30 corresponding to the predetermined view angle.

[1-2. Operation]

An operation of imaging system 100 configured as described above will be described below.

Imaging system 100 in FIG. 1 is mounted on vehicle 200. First imaging device 10a to third imaging device 10c in imaging system 100 respectively capture images of a scene ahead of the vehicle with view angles different from each other. Image analysis device 20 receives image data generated by first imaging device 10a to third imaging device 10c through first interface 23a to third interface 23c illustrated in FIG. 2. The image data is moving image data, for example.

Image processing circuit 21 in image analysis device 20 performs image analysis on the image data received from imaging devices 10a to 10c, and detects a detection target ahead of vehicle 200. Examples of the detection target include a vehicle, a person, a bicycle, a traffic lane, a traffic sign, and an obstacle. Herein, for an image received from first imaging device 10a, an entire region of the image is used for the image analysis. On the other hand, for images respectively received from second and third imaging devices 10b, 10c, entire regions of the images are not used for the image analysis, but only partial regions are used for the image analysis.

More specifically, when the image analysis is performed on an image of region A1 of a view field whose view angle is 35 degrees, image processing circuit 21 performs the image analysis on entire region R10 of first image 50a in FIG. 5, and detects the detection target. First image 50a is an image indicated by image data generated by first imaging device 10a.

Further, when the image analysis is performed on images of regions A2a and A2b of a view field whose view angle is not less than 35 degrees and not more than 50 degrees, image processing circuit 21 performs the image analysis on partial regions R21, R22 of second image 50b in FIG. 5. Second image 50b is an image indicated by image data generated by second imaging device 10b.

Further, when the image analysis is performed on images of regions A3a and A3b of a view field whose view angle is not less than 50 degrees, image processing circuit 21 performs the image analysis on partial regions R31, R32 of third image 50c in FIG. 5. Third image 50c is an image indicated by image data generated by third imaging device 10c.

From first image 50a indicating the view field whose view angle is 35 degrees, a detection target located at a comparatively remote place (for example, 250 m ahead) is detected. Further, from third image 50c indicating the view field whose view angle is from 50 degrees to 120 degrees inclusive, a detection target located at a comparatively near place (for example, 60 m ahead) is detected. From second image 50b indicating the view field whose view angle is from 35 degrees to 50 degrees, a detection target located with a middle distance (for example, 150 m ahead) is detected.

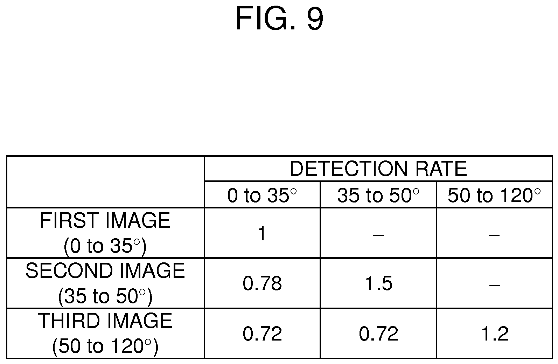

FIG. 9 is a table indicating detection rates for the detection target when imaging system 100 in this exemplary embodiment is used. The detection rate is a rate at which a detection target is detected from a captured image. FIG. 9 illustrates detection rates of the second image captured by second imaging device 10b and the third image captured by third imaging device 10c, when a detection rate of the first image captured by first imaging device 10a is used as a reference ("1").

With respect to the second image, the detection rate in region R20 corresponding to the view angle ranging from 0 degree to 35 degrees inclusive is 0.78, which is lower than the detection rate for the first image. On the other hand, the detection rate in regions R21, R22 corresponding to the view angle ranging from 35 degrees to 50 degrees is 1.5, which is a good detection rate.

Similarly, with respect to the third image, the detection rate in region R30 corresponding to the view angle ranging from 0 degree to 50 degrees is 0.72, which is lower than the detection rate for the first image. On the other hand, the detection rate in regions R31, R32 corresponding to the view angle ranging from 50 degrees to 120 degrees inclusive is 1.2, which is a good detection rate.

Image processing circuit 21 transmits the detection result of the detection target to control device 30. Control device 30 uses the detection result to determine a traffic condition ahead of the vehicle. Control device 30 controls action of control target 40 in the vehicle based on the detection result. Examples of control target 40 include a brake, an engine, a light, a speaker, a display, and a vibrator. Control target 40 may be a combination of those components. In other words, control device 30, for example, brakes the vehicle, controls a rotation speed of the engine, or turns on or off the light, according to the detection result. Furthermore, control device 30 outputs an alarm or a message from the speaker, displays the message on the display, or vibrates a seat or a steering wheel.

In this manner, vehicle 200 captures images ahead of the vehicle by using imaging system 100, analyzes a traffic situation ahead of the vehicle based on the captured images, and can control the action of vehicle 200 based on the analysis result.

[1-3. Effects and others]

As described above, imaging system 100 according to this exemplary embodiment includes first imaging device 10a and second imaging device 10b. First imaging device 10a includes optical system 122a (an example of a first optical system) for forming a subject image with a first view angle (for example, 35 degrees), and imaging element 121a (an example of a first imaging element) that captures the subject image formed through optical system 122a and generates first image data. Second imaging device 10b includes optical system 122b (an example of a second optical system) for forming a subject image with a second view angle (for example, 50 degrees) that is wider than the first view angle, and imaging element 121b (an example of a second imaging element) that captures the subject image formed through optical system 122b and generates second image data.

When a number of pixels that capture a subject image involved in a unit view angle is defined as a resolution, optical system 122b forms an image including region R20 (an example of a first region) and regions R21, R22 (an example of a second region), which do not overlap each other, such that a resolution in regions R21, R22 is higher than a resolution in region R20 corresponding to an imaging range of the first view angle, in an imaging surface of the subject image. Note that, in this exemplary embodiment, regions R21, R22 are regions corresponding to an imaging range with a view angle wider than the first view angle, for example.

Imaging system 100 may further include third imaging device 10c. Third imaging device 10c includes optical system 122c (an example of a third optical system) for forming a subject image with a third view angle (for example, 120 degrees) wider than the second view angle, and imaging element 121c (an example of a third imaging element) that captures the subject image formed through optical system 122c and generates third image data. In this case, optical system 122c forms an image including region R30 (an example of a third region) and regions R31, R32 (an example of a fourth region), which do not overlap each other, such that a resolution in regions R31, R32 is higher than a resolution in region R30 corresponding to an imaging range with the second view angle, in an imaging surface of the subject image formed through optical system 122c. Note that, in this exemplary embodiment, for example, regions R31, R32 are regions corresponding to an imaging range with a view angle wider than the second view angle.

With this configuration, in optical system 122b and optical system 122c, a resolution of an image in a region whose view angle does not overlap a smaller view angle of another optical system is set higher than a resolution of an image in a region whose view angle overlaps the smaller view angle of the other optical system. Accordingly, the image in the region whose view angle does not overlap the smaller view angle of the other optical system can be captured with high definition. Therefore, pixels in imaging elements 121b, 121c can efficiently be used, and thus sensing performance can be improved. In vehicle 200, the high-definition image is used for image analysis. This enables accurate detection of a detection target (for example, another vehicle, a person, or a traffic lane) and accurate control of action of vehicle 200 according to a road condition.

Optical system 122b and optical system 122c each include free-form surface lenses 123, 124. Use of the free-form surface lenses enables freely designing the magnification ratio that varies according to the view angle.

(Other exemplary embodiments)

The first exemplary embodiment has been described above as an example of the technique disclosed in the present application. However, the technique in the present disclosure is not limited to this and can also be applied to exemplary embodiments having undergone changes, replacements, additions, omissions, and the like as appropriate. In addition, new exemplary embodiments can be implemented by combining the respective constituent elements described above in the first exemplary embodiment. Hence, other exemplary embodiments will be described below.

In the above exemplary embodiment, a number of imaging devices, namely, optical systems is set to "3", but is not limited thereto. The idea of the present disclosure can be applied to any imaging system, as long as the imaging system includes a plurality (at least two) of imaging devices, namely, optical systems, which capture images of a view field in an identical direction with different view angles. For example, when one imaging device having a wider view angle and another imaging device having narrower view angle are provided, an optical system of the one imaging device may be designed such that a resolution in a region other than a view angle overlapping region is higher than a resolution in the view angle overlapping region, in an image formed by the optical system of the one imaging device.

The view angles illustrated in the above exemplary embodiment are examples, and the view angles are not limited to 35 degrees, 50 degrees, and 120 degrees.

In the above exemplary embodiment, imaging devices 10a to 10c perform the gamma correction and the distortion correction, but image analysis device 20 may perform the gamma correction and the distortion correction. Alternatively, imaging devices 10a to 10c may perform the gamma correction, and image analysis device 20 may perform the distortion correction.

In the above exemplary embodiment, a resolution of the first image formed by first imaging device 10a is set uniform, but optical system 122a may be designed such that the resolution varies according to a view angle. Furthermore, optical system 122b may be designed such that the resolution of the image in the region whose view angle is not less than 35 degrees is not uniform but varies according to the view angle, in the image formed by optical system 122b in second imaging device 10b. This is also applied to optical system 122c in third imaging device 10c.

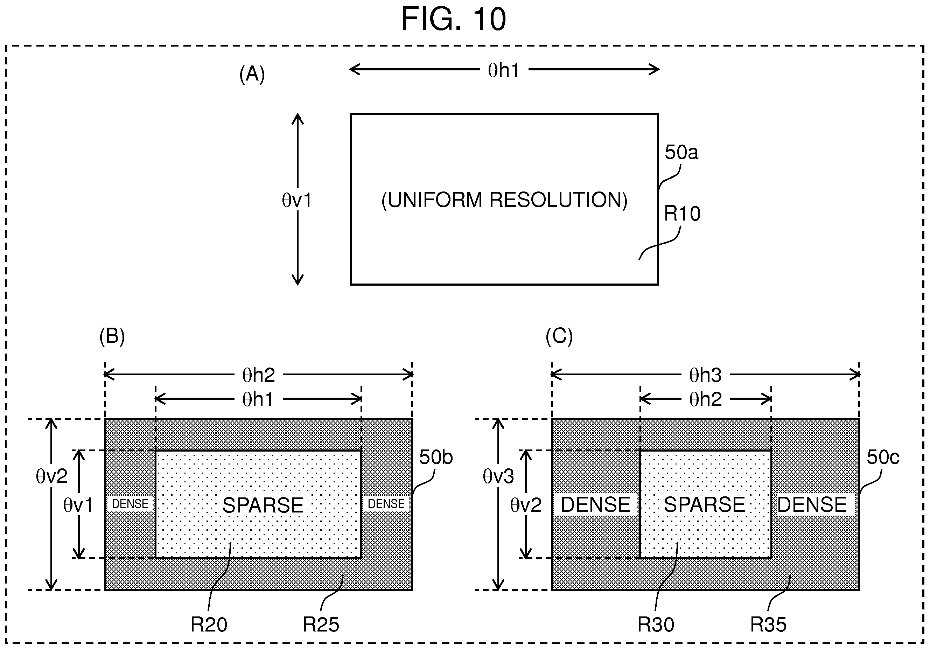

In the above exemplary embodiment, as illustrated in parts (B) and (C) of FIG. 5, optical systems 122b, 122c are designed such that the resolution of the image formed on the imaging element varies according to the view angle only in a horizontal direction. However, a mode of variation of the resolution is not limited thereto. As illustrated in parts (B) and (C) of FIG. 10, optical systems 122b, 122c may be designed such that the resolution also varies according to a view angle in a vertical direction, in addition to the view angle in the horizontal direction. For example, as illustrated in part (A) of FIG. 10, optical system 122a in first imaging device 10a is designed to capture an image of a range with a horizontal view angle being $\theta$h1 and a vertical view angle being $\theta$v1. As illustrated in part (B) of FIG. 10, optical system 122b in second imaging device 10b is designed to capture an image of a range with a horizontal view angle being $\theta$h2 (> $\theta$h1) and a vertical view angle being $\theta$v2 (> $\theta$v1). As illustrated in part (C) of FIG. 10, optical system 122c in third imaging device 10c is designed to capture an image of a range with a horizontal view angle being $\theta$h3 (> $\theta$h2) and a vertical view angle being $\theta$v3 (> $\theta$v2). Furthermore, optical system 122b in second imaging device 10b may be designed such that a resolution of region R25 surrounding region R20 is higher than a resolution of region R20 corresponding to the imaging range with the horizontal view angle being $\theta$h1 and the vertical view angle being $\theta$v1. Furthermore, optical system 122c in third imaging device 10c may be designed such that a resolution of region R35 surrounding region R30 is higher than a resolution of region R30 corresponding to the imaging range with the horizontal view angle being $\theta$h2 and the vertical view angle being $\theta$v2. Optical systems 122b, 122c set in this manner allow the captured image used for the image analysis to be switched according to both the horizontal view angle and the vertical view angle, whereby image data with high definition can be obtained over a wide range.

In the above exemplary embodiment, imaging devices 10a to 10c are disposed so as to capture the images of the scene ahead of the vehicle, but imaging devices 10a to 10c may be disposed so as to capture an image of a rear scene or a side scene of the vehicle.

In the above exemplary embodiment, the example in which the control system including imaging system 100 is applied to the automobile has been described. However this control system may be applied to another moving body (for example, any one of a train, a vessel, an airplane, a robot, a robot arm, and a drone) in addition to the automobile. In this case, the control system controls action of the other moving body according to the analysis result of imaging system 100. More specifically, the action of the other moving body is action of any one of a motor, an actuator, a display, a light-emitting diode (LED), and a speaker, for example. Alternatively, imaging system 100 or imaging devices 10a to 10c may be applied to a surveillance camera.

In the above exemplary embodiment, instead of the free-form surface lens used in the optical system, another type of lens (for example, a panomorph lens made by ImmerVision, Inc.) may be used, as long as the lens is a lens whose magnification ratio (that is, a resolution) can freely be designed according to a view angle.

(The present disclosure)

The above exemplary embodiment discloses configurations of an imaging system and a moving body control system that will be described below.

(1) An imaging system including a configuration described below
Imaging system (100) includes first imaging device (10a) and second imaging device (10b). First imaging device (10a) includes first optical system (122a) having a first view angle (35 degrees), and first imaging element (121a) that captures a first subject image formed through the first optical system and generates first image data. Second imaging device (10b) includes second optical system (122b) having a second view angle (50 degrees) that is wider than the first view angle, and second imaging element (121b) that captures a second subject image formed through the second optical system and generates second image data. When a number of pixels that capture a subject image involved in a unit view angle is defined as a resolution, second optical system (122b) is configured to form an image including first region (R20) and second regions (R21, R22), which do not overlap each other, such that a resolution in second regions (R21, R22) is higher than a resolution in the first region corresponding to an imaging range of the first view angle, in an imaging surface of the second subject image. This imaging system can efficiently use pixels of the imaging elements and can improve sensing performance.

(2) The imaging system in (1) may further include image analysis device (20) that analyzes the pieces of image data generated by the respective imaging devices. Image analysis device (20) obtains information of a subject present in imaging range (A1) with a first view angle by analyzing first image data (50a), and obtains information of a subject present inside an imaging range with the second view angle and outside the imaging range with the first view angle (A2a, A2b), by analyzing second image data (50b).

(3) The imaging system in (1) or (2) may further include third imaging device (10c). Third imaging device (10c) includes third optical system (122c) having a third view angle (120 degrees) that is wider than the second view angle, and third imaging element (121c) that captures a third subject image formed through the third optical system and generates third image data. The third optical system is configured to form an image including third region (R30) and fourth regions (R31, R32), which do not overlap each other, such that a resolution in fourth regions (R31, R32) is higher than a resolution in third region (R30) corresponding to an imaging range with the second view angle, in an imaging surface of the third subject image.

(4) In the imaging system in (1) or (2), second and third optical systems (122b, 122c) may each include free-form surface lenses (123, 124).

(5) The above exemplary embodiment discloses a moving body control system having a configuration described below.

The moving body control system includes imaging system (100) in (2) described above and control device (30) that controls action of moving body (200) based on information analyzed by the imaging system. According to the moving body control system, the action of the moving body is controlled based on an analysis result of the image data with high definition, whereby accurate control according to a surrounding condition can be achieved.

(6) In moving body control system in (5), the imaging system may further include third imaging device (10c). Third imaging device (10c) includes third optical system (122c) having a third view angle that is wider than the second view angle, and third imaging element (121c) that captures a subject image formed through the third optical system and generates third image data. The third optical system is configured to form an image including a third region and a fourth region, which do not overlap each other, such that a resolution in the fourth region is higher than a resolution in the third region corresponding to an imaging range with the second view angle, in an imaging surface of the third subject image. The control device may further obtain information of a subject present inside an imaging range with the third view angle and outside the imaging range with the second view angle (A3a, A3b), by analyzing third image data (50c).

(7) In the moving body control system in (5) or (6), the respective imaging devices may be disposed to the moving body such that positions of optical axes of the respective imaging devices in a horizontal direction substantially coincide with each other.

(8) In the moving body control system in (5) or (6), the respective imaging devices may be attached at a front part of the moving body so as to capture images ahead of the moving body.

(9) In the moving body control system in (5) or (6), the moving body may be any one of an automobile, a train, a vessel, an airplane, a robot, a robot arm, and a drone.

As described above, the exemplary embodiments have been described as an example of a technique according to the present disclosure. The accompanying drawings and the detailed description have been provided for this purpose.

Therefore, the components described in the accompanying drawings and the detailed description include not only the components essential for solving the problem but also components that are not essential for solving the problem in order to illustrate the technique. For this reason, even if these unessential components are described in the accompanying drawings and the detailed description, these unessential components should not be immediately approved as being essential.

Further, since the above-described exemplary embodiments illustrate the technique in the present disclosure, various modifications, substitutions, additions, and omissions can be made within the scope of claims and equivalent scope of claims.

An imaging system according to the present disclosure can provide image data with high definition used for image analysis, and is useful for a control system (for example, a control system of a vehicle) that controls a control target based on a result of the image analysis.

REFERENCE MARKS IN THE DRAWINGS

10a to 10c: imaging device
20: image analysis device
21: image processing circuit

30: control device
40: control target
50a to 50c: image or captured image formed by optical system
100: imaging system
121a to 121c: imaging element
122a to 122c: optical system
123, 124: free-form surface lens
131a to 131c: signal processing circuit
133a to 133c: interface
200: automotive vehicle
A1, A2a, A2b, A3a, A3b: region of view field
R10, R20, R21, R22, R30, R31, R32: region on image formed by optical system
W1 to W3: view angle

**Claims**

1. An imaging system comprising:

   a first imaging device that includes a first optical system having a first view angle, and a first imaging element that captures a first subject image formed through the first optical system and generates first image data; and
   a second imaging device that includes a second optical system having a second view angle that is wider than the first view angle, and a second imaging element that captures a second subject image formed through the second optical system and generates second image data,
   wherein, when a number of pixels that capture a subject image involved in a unit view angle is defined as a resolution, the second optical system is configured to form an image including a first region and a second region, which do not overlap each other, such that a resolution in the second region is higher than a resolution in the first region corresponding to an imaging range with the first view angle, in an imaging surface of the second subject image.

2. The imaging system according to claim 1, further comprising an image analysis device configured to analyze the first image data and the second image data,
   wherein the image analysis device is configured to obtain first information of a subject present inside the imaging range with the first view angle by analyzing the first image data, and obtains second information of a subject present inside an imaging range with the second view angle and outside the imaging range with the first view angle, by analyzing the second image data.

3. The imaging system according to claim 1 or 2, further comprising a third imaging device that includes a third optical system having a third view angle that is wider than the second view angle, and a third imaging element that captures a third subject image formed through the third optical system and generates third image data,
   wherein the third optical system is configured to form an image including a third region and a fourth region, which do not overlap each other, such that a resolution in the fourth region is higher than a resolution in the third region corresponding to the imaging range with the second view angle, in an imaging surface of the third subject image.

4. The imaging system according to claim 3, wherein each of the second and third optical systems include a free-form surface lens.

5. A moving body control system comprising:

   the imaging system according to claim 2; and
   a control device configured to control action of a moving body based on the first information and the second information analyzed by the imaging system.

6. The moving body control system according to claim 5, wherein
   the imaging system further includes a third imaging device that includes a third optical system having a third view angle that is wider than the second view angle, and a third imaging element that captures a third subject image formed through the third optical system and generates third image data,
   the third optical system is configured to form an image including a third region and a fourth region, which do not overlap each other, such that a resolution in the fourth region is higher than a resolution in the third region corresponding to the imaging range with the second view angle, in an imaging surface of the third subject image, and the image analysis device is further configured to obtain third information of a subject present inside an imaging range with the third view angle and outside the imaging range with the second view angle, by analyzing the third image data.

7. The moving body control system according to claim 5, wherein the first imaging device and the second imaging device are disposed to the moving body such that positions of optical axes of the first imaging device and the second imaging device in a horizontal direction substantially coincide with each other.

8. The moving body control system according to claim 6, wherein the first imaging device, second imaging device, and third imaging device are disposed to the moving body such that positions of optical axes of the first imaging device, second imaging device, and third imaging device in a horizontal direction substantially coincide with each other.

9. The moving body control system according to claim 5, wherein each of the first imaging device and second imaging device is attached to a front part of the moving body so as to capture an image of a subject ahead of the moving body.

10. The moving body control system according to claim 6, wherein each of the first imaging device, second imaging device, and third imaging device is attached to a front part of the moving body so as to capture an image of a subject ahead of the moving body.

11. The moving body control system according to claim 5 or 6, wherein the moving body is any one of an automobile, a train, a vessel, an airplane, a robot, a robot arm, and a drone.

# FIG. 1

# FIG. 2

FIG. 3

**FIRST IMAGING DEVICE** — 10a

122a    121a    131a    133a

| IMAGING ELEMENT | SIGNAL PROCESSING CIRCUIT | INTERFACE |

100

**SECOND IMAGING DEVICE** — 10b

122b    121b    131b    133b

| IMAGING ELEMENT | SIGNAL PROCESSING CIRCUIT | INTERFACE |

20

IMAGE ANALYSIS DEVICE

**THIRD IMAGING DEVICE** — 10c

122c    121c    131c    133c

| IMAGING ELEMENT | SIGNAL PROCESSING CIRCUIT | INTERFACE |

# FIG. 4

# FIG. 5

(A)

←————— 35° —————→

(UNIFORM RESOLUTION)

50a

R10

(B)

←——————— 50° ———————→

←———— 35° ————→

DENSE | SPARSE | DENSE

50b

R21    R20         R22

(C)

←———————— 120° ————————→

←———— 50° ————→

DENSE | SPARSE | DENSE

50c

R31    R30         R32

# FIG. 6

<u>122b</u>

129    123    124

121b

UP

REAR ← ● → FRONT

HORIZONTAL DIRECTION OF ↙ DOWN
IMAGING ELEMENT

FIG. 7

# FIG. 8

# FIG. 9

| | DETECTION RATE | | |
|---|---|---|---|
| | 0 to 35° | 35 to 50° | 50 to 120° |
| FIRST IMAGE (0 to 35°) | 1 | – | – |
| SECOND IMAGE (35 to 50°) | 0.78 | 1.5 | – |
| THIRD IMAGE (50 to 120°) | 0.72 | 0.72 | 1.2 |

# FIG. 10

(A)

θh1

50a

(UNIFORM RESOLUTION)

R10

θv1

(B)

50b

θh2

θh1

SPARSE

DENSE

DENSE

R25

R20

θv2

θv1

(C)

50c

θh3

θh2

DENSE

SPARSE

DENSE

R35

R30

θv3

θv2

Europäisches
Patentamt

European
Patent Office

Office européen
des brevets

# EUROPEAN SEARCH REPORT

Application Number

EP 18 17 1096

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/055060 A1 (CONTI TEMIC MICROELECTRONIC [DE]) 14 April 2016 (2016-04-14) | 1,2,5,7,9,11 | INV. H04N5/225 H04N5/232 |
| Y | * paragraphs [0002] - [0003], [0046] - [0049]; figures 1-2,8 * | 3,4,6,8,10 | |
| X,P | -& US 2017/310952 A1 (ADOMAT ROLF [DE] ET AL) 26 October 2017 (2017-10-26) | 1,2,5,7,9,11 | |
| Y,P | | 3,4,6,8,10 | |
| | ----- | | |
| Y | US 2015/332114 A1 (SPRINGER OFER [IL]) 19 November 2015 (2015-11-19) * paragraph [0040]; figure 1 * | 3,4,6,8,10 | |
| | ----- | | |
| Y | Simon Thibault: "Panomorph Based Panoramic Vision Sensors" In: "Vision Sensors and Edge Detection", 1 August 2010 (2010-08-01), Sciyo, XP055218910, ISBN: 978-953-30-7098-8 pages 1-28, DOI: 10.5772/56692, * section Introduction * | 4 | |
| | ----- | | |

TECHNICAL FIELDS
SEARCHED    (IPC)

H04N

The present search report has been drawn up for all claims

| Place of search | Date of completion of the search | Examiner |
|---|---|---|
| The Hague | 24 September 2018 | Daribo, Ismael |

EPO FORM 1503 03.82 (P04C01)

## ANNEX TO THE EUROPEAN SEARCH REPORT
## ON EUROPEAN PATENT APPLICATION NO.

EP 18 17 1096

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2018

| Patent document cited in search report | Publication date | Patent family member(s) | Publication date |
|---|---|---|---|
| WO 2016055060 A1 | 14-04-2016 | CN 106797461 A<br>DE 102014220585 A1<br>DE 112015003116 A5<br>EP 3205090 A1<br>JP 2017538303 A<br>US 2017310952 A1<br>WO 2016055060 A1 | 31-05-2017<br>14-04-2016<br>16-03-2017<br>16-08-2017<br>21-12-2017<br>26-10-2017<br>14-04-2016 |
| US 2017310952 A1 | 26-10-2017 | CN 106797461 A<br>DE 102014220585 A1<br>DE 112015003116 A5<br>EP 3205090 A1<br>JP 2017538303 A<br>US 2017310952 A1<br>WO 2016055060 A1 | 31-05-2017<br>14-04-2016<br>16-03-2017<br>16-08-2017<br>21-12-2017<br>26-10-2017<br>14-04-2016 |
| US 2015332114 A1 | 19-11-2015 | CN 106663193 A<br>EP 3143607 A1<br>US 2015332114 A1<br>US 2016371550 A1<br>US 2018189579 A1<br>WO 2015177648 A1 | 10-05-2017<br>22-03-2017<br>19-11-2015<br>22-12-2016<br>05-07-2018<br>26-11-2015 |

EPO FORM P0459

For more details about this annex : see Official Journal of the European Patent Office, No. 12/82

**EP 3 404 911 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017046051 A
- JP 2017017480 A